# EUROPEAN PATENT APPLICATION

(11) **EP 4 576 853 A1**
(43) Date of publication of application: **25.06.2025**
(21) Application number: 24216547.0
(22) Date of filing: 29.11.2024
(51) Int. Cl.: H04W 12/03, H04W 12/06, H04W 12/50, H04W 76/15, H04W 84/12

(54) **COMMUNICATION APPARATUS, CONTROL METHOD, STORAGE MEDIUM, AND PROGRAM PRODUCT**

(30) Priority: 22.12.2023 JP 2023217086
(71) Applicant: CANON KABUSHIKI KAISHA, Tokyo 146-8501 (JP)
(72) Inventor: ITO, Yuki, Tokyo, 146-8501 (JP)
(74) Representative: TBK

(57) **Abstract**

A communication apparatus (102) performs wireless communication with a wireless communication apparatus (101) compliant with a standard of IEEE802.11 series supporting Multi-Link communication. The communication apparatus (102) includes a reception unit (504) that receives a signal including information necessary for communication connection for performing the wireless communication from the wireless communication apparatus (101), and a link establishment unit (501) that establishes a link with the wireless communication apparatus (101) based on the signal. The link establishment unit (501) establishes at least one link with at least one communication unit whose security strength satisfies a predetermined condition among a plurality of communication units belonging to the wireless communication apparatus (101) and operating via different frequency channels, when the signal includes predetermined information indicating that the wireless communication apparatus (101) supports the Multi-Link communication.

## Description

### BACKGROUND

### Field of the Disclosure

The present disclosure relates to a communication apparatus capable of a Multi-Link communication, a control method therefor, a storage medium storing a control program therefor, and a computer program product therefor.

### Description of the Related Art

Communication technologies such as wireless local area networks (LANs) are developed. As a main communication standard of the wireless LAN, the IEEE (Institute of Electrical and Electronics Engineers) 802.11 standard series is known. The IEEE 802.11 standard series includes IEEE 802.11a/b/g/n/ac/ax standards. For example, in the IEEE 802.11ax, a technology for improving a communication speed in a congestion situation in addition to a high peak throughput of 9.6 gigabits per second (Gbps) at the maximum by using OFDMA (Orthogonal Frequency-Division Multiple Access) is standardized (for example, see Japanese Patent Laid-Open Publication No. 2018-050133A (Counterpart of US20180084584A1)).

Also, a task group has been launched that develops IEEE802.11be as a successor standard that aims to further increase throughput, improve utilization efficiency of frequencies, and improve communication latency. In IEEE802.11be, for example, multi-link communication in which one Access Point (AP) establishes a plurality of links with one station (STA) via a plurality of different frequency channels and performs communication in parallel is examined.

In the conventional IEEE802.11 standard series, an STA connects to an AP and performs data communication with the AP over a single link. On the other hand, in the IEEE802.11be, the STA establishes two or more links with the AP and performs data communications simultaneously using the two or more established links, thereby achieving an improvement in throughput. In IEEE802.1 1be, support of a 6 GHz bands is also examined in order to expand usable frequency bands. The two or more links may be selected from the same frequency band (any of a sub-GHz band, a 2.4 GHz band, a 3.6 GHz band, 4.9 and 5 GHz bands, a 60 GHz band, and a 6 GHz band), or may be selected from different bands.

In such a configuration in which two or more links can be established with an AP, when a link with a low security strength is included in the established links, there is a concern that vulnerability will increase due to this link.

### SUMMARY

Embodiments of the present disclosure provide a communication apparatus, a control method therefor, a storage medium storing a control program therefor, and a computer program product therefor, which are capable of achieving data communication with security strength equal to or higher than a certain level.

According to a first aspect of the present invention provides a communication apparatus as specified in claims 1 to 9.

Accordingly, a second aspect of the present invention provides a control method for a communication apparatus as specified in claim 10.

Accordingly, a third aspect of the present invention provides a storage medium as specified in claim 11.

Accordingly, a fourth aspect of the present invention provides a computer program product as specified in claim 12.

Further features will become apparent from the following description of exemplary embodiments with reference to the attached drawings.

### BRIEF DESCRIPTION OF THE DRAWINGS

FIG. 1 is a configuration diagram illustrating an example of a communication system including an STA (a station) as a communication apparatus according to the present embodiment.
FIG. 2 is a sequential chart illustrating Multi-Link communication between the STA and an AP in FIG. 1.
FIG. 3 is a diagram illustrating an example of an RNR element included in a frame sent by an affiliated AP supporting the Multi-Link communication.
FIG. 4 is a block diagram schematically illustrating a hardware configuration of the STA in FIG. 1.
FIG. 5 is a block diagram illustrating an example of a functional configuration of the STA in FIG. 1.
FIG. 6 is a flowchart illustrating a procedure of a link establishment control process performed by the STA in FIG. 1.
FIG. 7 is a flowchart illustrating a procedure of a determination process in S608 in FIG. 6.
FIG. 8 is a flowchart illustrating another procedure of the link establishment control process performed by the STA in FIG. 1.
FIG. 9 is a flowchart illustrating a procedure of a determination process in S808 in FIG. 8.

### DESCRIPTION OF THE EMBODIMENTS

Hereafter, some exemplary embodiments according to the present disclosure will be described in detail by referring to the drawings.

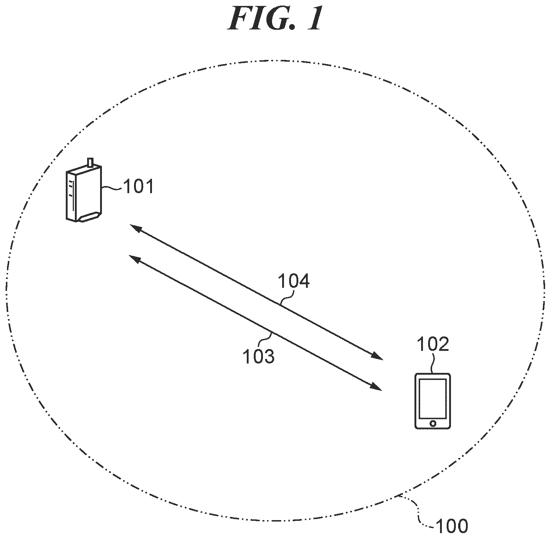

FIG. 1 is a configuration diagram illustrating an example of a communication system including an STA (a station) 102 as a communication apparatus according to the present embodiment. This communication system includes the STA 102 and an AP (Access Point) 101 as a wireless communication apparatus. In FIG. 1, a circle 100 indicates a network formed by the AP 101. For example, when the STA 102 exists in the area indicated by the circle 100, the STA102 can receive a frame (signal), such as a beacon or a probe response, transmitted from the AP 101.

The STA 102 is participating in the network formed by the AP 101, and the AP 101 and the STA 102 are capable of performing wireless communication in compliance with the IEEE802.11be (EHT) standard. EHT is an abbreviation for Extremely High Throughput. EHT may be interpreted as an abbreviation of Extreme High Throughput. The AP 101 and the STA 102 are communicable in a plurality of bands, such as a 2.4 GHz band, a 5 GHz band, and a 6 GHz band. Note that the frequency bands in which the AP 101 and the STA 102 can communicate are not limited to them. The AP 101 and the STA 102 can communicate in another frequency band, such as a 60 GHz band. Further, the AP 101 and the STA 102 can communicate using bandwidths of 20 GHz, 40 MHz, 80 MHz, 160 MHz, and 320 MHz. Note that the bandwidths used by the AP 101 and the STA 102 are not limited to them, and other bandwidths, such as 240 MHz and 4 MHz, may be used.

In the present embodiment, the AP 101 and the STA 102 may comply with a legacy standard that is a standard prior to the IEEE802.11be standard, in addition to the IEEE802.11be standard. In particular, the AP 101 and the STA 102 may correspond to at least one of the IEEE802.11a/b/g/n/ac/ax standards. Further, the AP 101 and the STA 102 may support other communication standards, such as Bluetooth (registered trademark), NFC, UWB, ZigBee, and MBOA, in addition to the IEEE802.11 series standards, such as IEEE802.11a/b/g/n/ac/ax/be. Note that UWB is an abbreviation of Ultra Wide Band, and MBOA is an abbreviation of Multi Band OFDM Alliance. Further, NFC is an abbreviation of Near Field Communication. The UWB includes wireless USB, wireless 1394, WiNET, and the like. The communication standard may also be a communication standard for wired communication such as a wired LAN.

Specific examples of the AP 101 include, but are not limited to, a wireless LAN router and a personal computers (PC). The AP 101 may be an information processor such as a wireless chip capable of performing wireless communication compliant with the IEEE802.11be standard. Specific examples of the STA 102 include, but are not limited to, a camera, a tablet, a smartphone, a PC, a mobile phone, a video camera, and a headset. The STA 102 may be an information processor such as a wireless chip capable of performing wireless communication compliant with the IEEE802.11be standard.

The AP 101 and the STA 102 perform Multi-Link communication in which links are established and communication is performed via multiple frequency channels. In the IEEE802.11 series standards, the bandwidth of each channel is defined as 20 MHz. The frequency channel used herein is defined in the IEEE802.11 series standards, and the IEEE802.11 series standards define a plurality of frequency channels in each of the 2.4 GHz band, 5 GHz band, 6 GHz band, and 60 GHz band. Note that a bandwidth more than 40 MHz may be used in one channel by bonding to an adjacent channel. For example, the AP 101 may communicate with the STA 102 by establishing a link 103 via a first channel in the 5 GHz band. In parallel with this, the STA 102 can establish a link 104 with the AP 101 via a second channel of the 6 GHz band to communicate. In this case, the STA 102 performs the Multi-Link communication that maintains the link 104 via the second channel in parallel with the link 103 via the first channel.

Note that in the Multi-Link communication, a plurality of links with different frequency bands may be established between communication devices. For example, the AP 101 and the STA 102 may establish a third link in a 2.5 GHz band in addition to the link 103 in the 4 GHz band and the link 104 in the 6 GHz band. In the Multi-Link communication, a link may be established between communication devices via a plurality of different frequency channels included in the same frequency band. For example, the AP 101 and the STA 102 may establish the first link via a 15ch in the 6 GHz band and the second link via a 207ch in the 6 GHz band. Note that links in the same frequency band and links in different frequency bands may be mixed.

For example, the AP 101 and the STA 102 may establish a link via 36ch in the 5 GHz band and a link via 149ch in the 5 GHz band in addition to the link 103 via the 15ch in the 6 GHz band. In this way, since the STA 102 establishes a plurality of links with the AP 101 via the different frequency channels, even if one of the established links is congested, communication can be kept via the other links. As a result, the STA 102 can prevent a decrease in throughput and a communication delay in the communication with the AP 101.

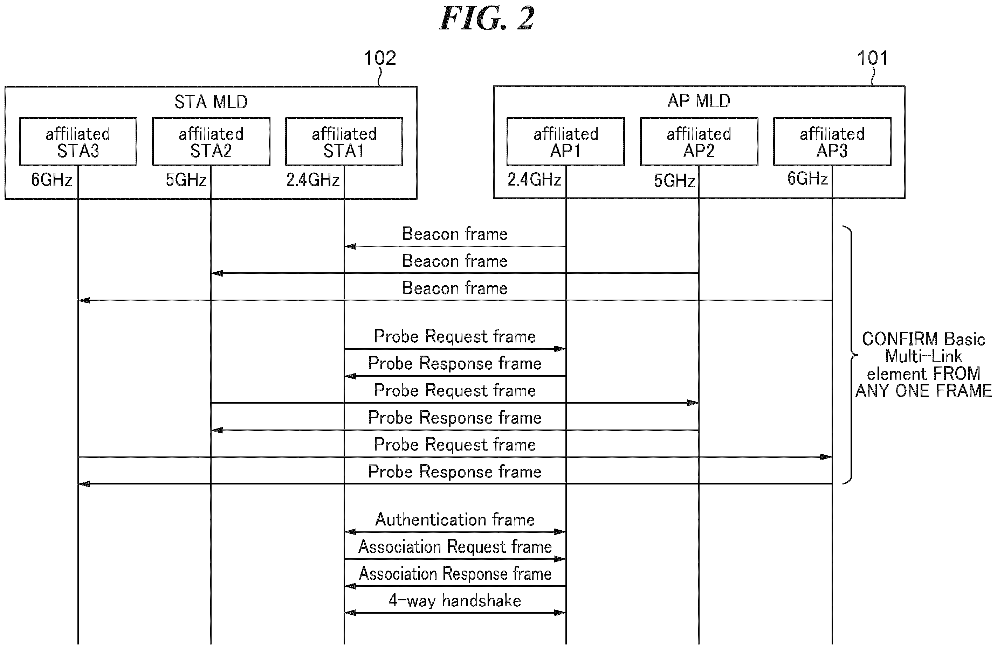

FIG. 2 is a sequential chart illustrating the Multi-Link communication between the STA 102 and the AP 101 in FIG. 1. Note that the AP and the STA supporting the Multi-Link communication are referred to as an AP MLD and an STA MLD, respectively. The AP 101 is described as the AP MLD 101 and the STA 102 is described as the STA MLD 102. Note that MLD is an abbreviation for Multi-Link Device. In addition, APs associated with the AP MLD and operating on different frequency channels are referred to as affiliated APs, and STAs associated with the STA MLD and operating on different frequency channels are referred to as affiliated STAs. FIG. 2 shows an affiliated AP1 and an affiliated STA1 operating in the 2.4 GHz band. Further, FIG. 2 shows an affiliated AP2 and an affiliated STA2 that operate in the 5 GHz band. Furthermore, FIG. 2 shows an affiliated AP3 and an affiliated STA3 that operate in the 6 GHz band.

The AP 101 adds a Basic Multi-Link element indicating that an apparatus supports the Multi-Link communication to a frame such as a Beacon or a Probe Response. The affiliated AP1, AP2, and AP3 transmit this frame via the respective channels.

The STA 102 determines whether the transmission source of the received frame supports the Multi-Link communication based on whether the frame includes the Basic Multi-Link element.

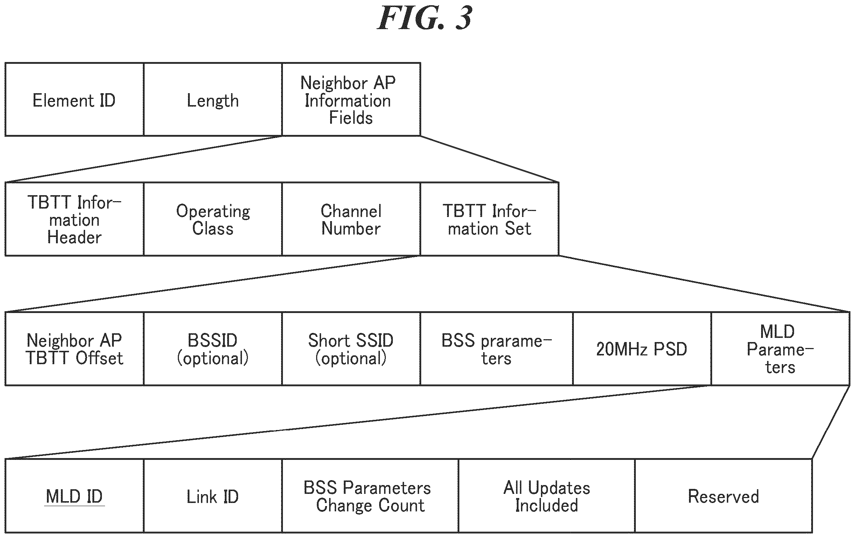

For example, when the transmission source of the frame is the affiliated AP1 belonging to the AP 101, the frame includes an RNR (a Reduced Neighbor Report) element as shown in FIG. 3. The STA 102 obtains information about the other affiliated AP2 and AP3 belonging to the same AP 101 as the affiliated AP1 that has transmitted this frame from the RNR element.

Whether the received frame is transmitted from the affiliated AP2 or AP3 belonging to the same AP 101 is determined on the basis of an MLD ID included in the RNR element. The MLD ID is identification information uniquely assigned to the AP 101. The STA 102 switches the channel to the channel indicated by the obtained information, and receives a frame, such as a Beacon or a Probe Response, transmitted from each of the affiliated AP2 and AP3. Based on the received frames, the STA 102 establishes links with the affiliated AP1, AP2, and AP3, respectively. This enables the STA 102 to perform the Multi-Link communication with the AP 101, which improves throughput in communication with the AP 101.

On the other hand, if the transmission source of the frame is not an AP that supports the Multi-Link communication, the STA 102 establishes a link with the transmission source of the frame via a single frequency channel.

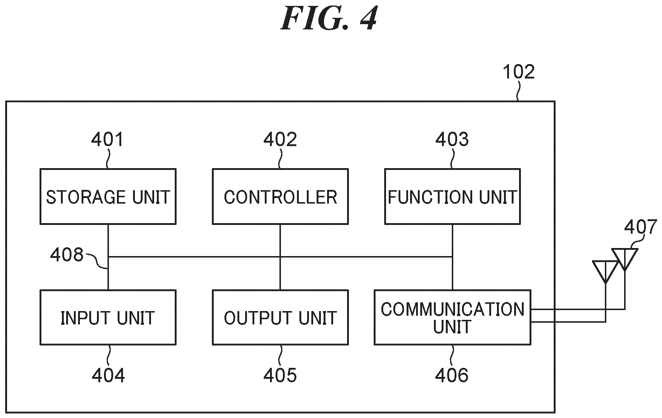

FIG. 4 is a block diagram schematically illustrating a hardware configuration of the STA 102 in FIG. 1. In FIG. 4, the STA 102 includes a storage unit 401, a controller 402, a function unit 403, an input unit 404, an output unit 405, a communication unit 406, and antennas 407. The storage unit 401, the controller 402, the function unit 403, the input unit 404, the output unit 405, and the communication unit 406 are mutually connected via a bus 408.

The storage unit 401 is configured by one or more memories, such as a ROM or a RAM, and stores programs for performing various operations described later and various pieces of information, such as communication parameters for performing wireless communication. Note that ROM is an abbreviation of Read Only Memory, and RAM is an abbreviation of Random Access Memory. The storage unit 401 may employ, in addition to memories such as a ROM or a RAM, storage media, such as a flexible disk, a hard disk, an optical disk, a magneto-optical disk, a CD-ROM, a CD-R, a magnetic tape, a nonvolatile memory card, and a DVD. The storage unit 401 may include a plurality of storage media.

The controller 402 is configured by one or more processors, such as a CPU or an MPU, and controls the entire STA 102 by executing the programs stored in the storage unit 401. Note that the controller 402 may control the entire STA 102 by cooperation between the programs stored in the storage unit 401 and an OS (Operating System). In addition, the controller 402 generates data or a frame to be transmitted in communication with another communication apparatus. Note that CPU is an abbreviation of Central Processing Unit, and MPU is an abbreviation of Micro Processing Unit. The controller 402 may include a multi-core processor having a plurality of cores, and the multi-core processor may control the entire STA 102.

The controller 402 controls the functional unit 403 to perform predetermined processes, such as wireless communication, image capturing, printing, and projection. The function unit 403 is hardware used when the STA 102 executes the predetermined processes.

The input unit 404 receives various operations from a user. The output unit 405 outputs various kinds of information to the user via a monitor screen or a speaker. Here, the output by the output unit 405 may be display on the monitor screen, audio output by the speaker, vibration output, or the like. Note that both the input unit 404 and the output unit 405 may be implemented by one module, such as a touch panel. The input unit 404 and the output unit 405 may be integrated with the STA 102 or may be separated from the STA 102.

The communication unit 406 controls wireless communication compliant with the IEEE802.11be standard. The communication unit 406 may control wireless communication compliant with another IEEE802.11 series standard in addition to the IEEE802.11be standard and may control wired communication such as a wired LAN. The communication unit 406 controls the antennas 407 to transmit the frame for performing wireless communication generated by the controller 402 to an external apparatus.

Note that if the STA 102 supports the NFC standard, the Bluetooth standard, or the like in addition to the IEEE802.11be standard, the communication unit 406 may control wireless communication compliant with these communication standards. In addition, when the STA 102 can execute wireless communications compliant with a plurality of communication standards, the STA 102 may include dedicated communication units and antennas corresponding to the respective communication standards. The STA 102 transmits and receives image data, document data, video data, and other information to and from an external apparatus like the AP 101 via the communication unit 406. The antennas 407 may be configured separately from the communication unit 406, or may be configured as one module together with the communication unit 406.

The antenna 407 enables communications in the 2.4 GHz band, 5 GHz band, and 6 GHz band. In the present embodiment, the STA 102 is configured to include the two antennas, but this configuration is not limiting. For example, the STA 102 may include different antennas for different frequency bands, that is, may include three antennas corresponding to the 2.4 GHz band, 5 GHz band, and 6 GHz band, respectively. In addition, the STA 102 may include a plurality communication units corresponding to the respective antennas.

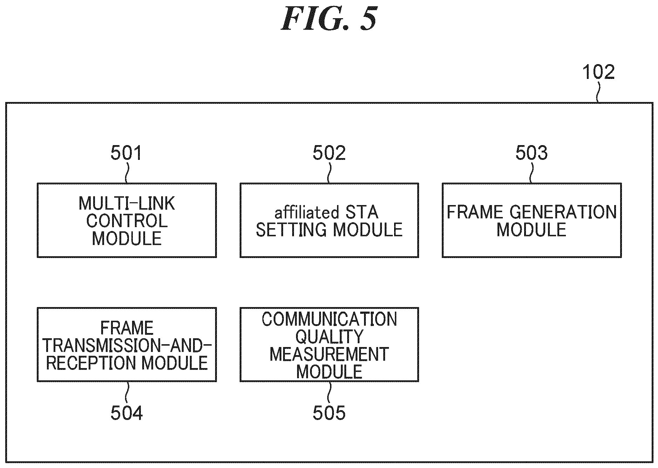

FIG. 5 is a block diagram illustrating an example of a functional configuration of the STA 102 in FIG. 1. In FIG. 5, the STA102 includes, as functional components, a Multi-Link control module 501, an affiliated STA setting module 502, a frame generation module 503, a frame transmission-and-reception module 504, and a communication quality measurement module 505.

The Multi-Link control module 501 (a link establishment unit) controls a communication start process to establish one or more links used by the STA 102 for wireless communication with the AP 101, a process of adding or deleting a link after the start of communication, and a communication end process to delete all links. Specifically, the communication start process includes an authentication process, an association process, and a 4-way-hand-shake (4WHS) process.

The affiliated STA setting module 502 selects and determines an affiliated STA in the Multi-Link communication set by the user through the input unit 404. The affiliated STA setting module 502 notifies the frame transmission-and-reception module 504 of the frequency channel to be used.

The frame generation module 503 generates a frame to be transmitted in accordance with the setting of the affiliated STA setting module 502.

The frame transmission-and-reception module 504 (a reception unit) receives a frame such as a Beacon or a Probe Response from a target apparatus via a frequency channel indicated by the notification received from the affiliated STA setting module 502.

The communication quality measurement module 505 measures the communication quality of a frame such as a Beacon or a Probe Response received by the frame transmission-and-reception module 504. In the measurement of the communication quality, for example, RSSI, SNR, or the like is used.

Next, a process in which the STA 102 establishes a link with the AP 101 will be described.

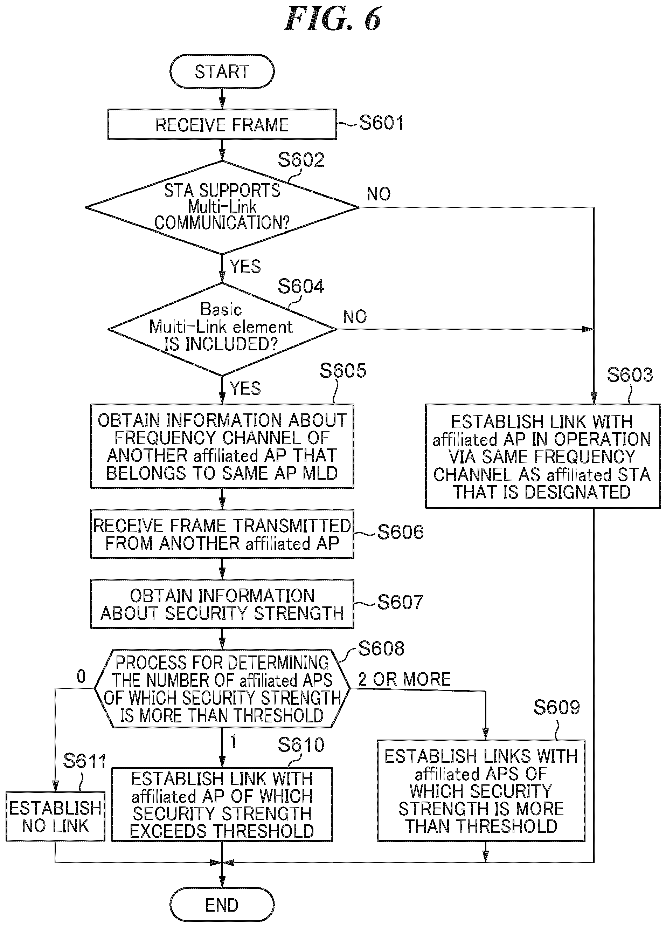

FIG. 6 is a flowchart illustrating a procedure of a link establishment control process performed by the STA 102 in FIG. 1. The link establishment control process in FIG. 6 is achieved by the controller 402 executing a program stored in the storage unit 401. The link establishment control process in FIG. 6 is executed, for example, when the STA 102 starts trying connection to the AP 101 in a state where the Multi-Link mode for performing the Multi-Link communication is set by the user in the STA 102. Alternatively, the process is executed when an AP to be connected is re-determined due to a bad radio wave environment or the like.

In FIG. 6, first, the controller 402 receives a frame such as a Beacon or a Probe Response via an affiliated STA designated by the user from among the affiliated STA1, STA2, and STA3 (S601, a reception step). For example, when the user designates the affiliated STA1, a frame transmitted from the affiliated STA1 operating in the same frequency channel as the affiliated AP1 is received in S601.

Next, the controller 402 determines whether the STA 102 supports the Multi-Link communication (S602).

When it is determined in S602 that the STA 102 does not support the Multi-Link communication, the process proceeds to S603. In S603 (a link establishment step), the controller 402 establishes a link with the affiliated AP1 in operation via the same frequency channel as the affiliated STA1 designated by the user. Thereafter, the present process is terminated.

When it is determined in S602 that the STA 102 supports the Multi-Link communication, the process proceeds to S604. In S604, the controller 402 determines whether the frame received in S601 includes a Basic Multi-Link element. That is, it is determined whether the AP 101, which is the transmission source of the frame received in S601, supports the Multi-Link communication.

When it is determined in S604 that the frame received in S601 includes no Basic Multi-Link element, that is, when the AP 101 does not support the Multi-Link communication, the process proceeds to S603.

When it is determined in S604 that the frame received in S601 includes a Basic Multi-Link element, that is, when the AP 101 supports the Multi-Link communication, the process proceeds to S605.

In S605, the controller 402 obtains, from the frame received in S601, information about frequency channels of the affiliated AP2 and AP3, which belongs to the same AP MLD (AP 101) as the affiliated AP1 that has transmitted this frame.

The controller 402 then switches the channel to the frequency channel indicated by the information obtained in S605 and receives frames transmitted from the affiliated AP2 and AP3 operating via this frequency channel, respectively (S606). In S606, a frame transmitted from an affiliated AP belonging to an AP MLD other than the AP 101 may be received. Thus, the controller 402 determines whether the transmission source of the frame received in S606 belongs to the same AP MLD as the transmission source of the frame received in S601. This determination is made based on MLD IDs included in the frames received in S601 and S606. For example, when these MLD IDs do not match, it is determined that the transmission source of the frame received in S606 belongs to an AP MLD different from the transmission source of the frame received in S601. On the other hand, when these MLD IDs match, it is determined that the transmission source of the frame received in S606 belongs to the same AP MLD as the transmission source of the frame received in S601. In the subsequent process, only the frame transmitted from the affiliated AP belonging to the same AP MLD as the transmission source of the frame received in S601 is used among the plurality of frames received in S606.

Next, the controller 402 obtains information about the security strength of each of the affiliated AP1, AP2, and AP3 from the frames received in S601 and S606 (S607). The information about the security strength includes, for example, information indicating a security standard of an affiliated AP of a transmission source, information indicating an encryption method used in the affiliated AP of the transmission source, information indicating an authentication method used in the affiliated AP of the transmission source, and information about a mode indicating a usage of an AP MLD to which the affiliated AP of the transmission source belongs, but is not limited thereto.

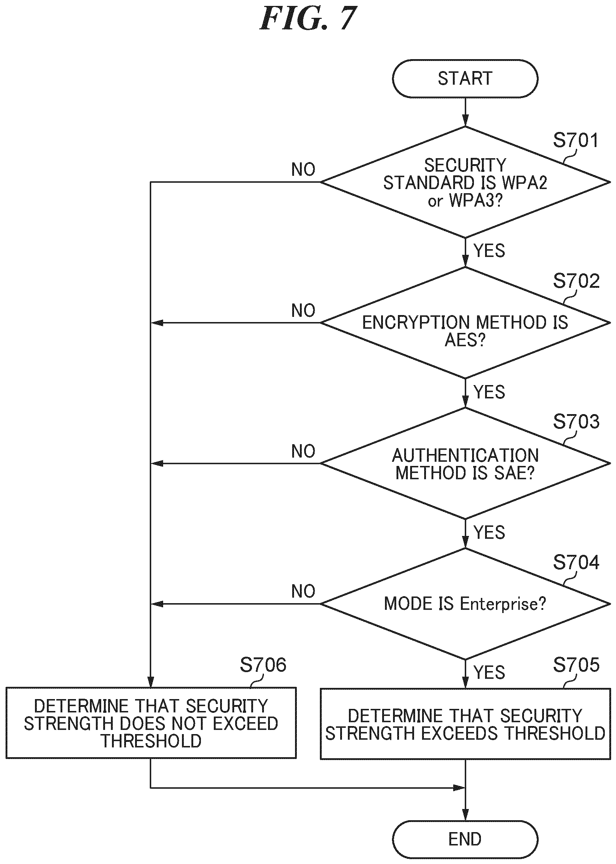

Next, the controller 402 (a determination unit) performs a number determination process in FIG. 7 described later of determining the number of affiliated APs of which the security strengths are higher than a threshold (S608).

When the number of affiliated APs whose security strength is determined to be higher than the threshold in S608 is two or more, the process proceeds to S609. In S609 (the link establishment step), the controller 402 establishes links with the plurality of affiliated APs whose security strengths are determined to be higher than the threshold among the affiliated AP1, AP2, and AP3 belonging to the AP 101.

For example, when it is determined that the security strengths of all the affiliated AP1, AP2, and AP3 are higher than the threshold, the controller 402 establishes the links with the affiliated AP1, AP2, and AP3, respectively. When it is determined that the security strengths of two of the affiliated AP1, AP2, and AP3 are higher than the threshold, the controller 402 establishes the links with the two affiliated APs whose security strengths are determined to be higher than the threshold, respectively. Thereafter, the present process is terminated.

When the number of affiliated APs whose security strengths are determined to be higher than the threshold in S608 is one, the process proceeds to S610. In S610 (the link establishment step), the controller 402 establishes a link with one affiliated AP whose security strength is determined to be higher than the threshold among the affiliated AP1, AP2, and AP3 belonging to the AP 101. Thereafter, the present process is terminated. As described above, in the present embodiment, a link is established with an affiliated AP whose security strength is determined to be higher than the threshold among the affiliated AP1, AP2, and AP3 belonging to the AP 101. In S610, the user may be inquired whether to establish communication via one link with high security strength or to establish communication via a plurality of links including a link with low security strength, and whether to establish one link or a plurality of links may be controlled on the basis of the instruction from the user.

If the number of affiliated APs whose security strengths are determined to be higher than the threshold in S608 is 0, the process proceeds to S611. In S611, the controller 402 does not establish a link with any of the affiliated AP1, AP2, and AP3 belonging to the AP 101. At this time, for example, a notification indicating that no link with the AP 101 is established is displayed on the output unit 405. Thereafter, the present process is terminated. When it is determined that there is no link satisfying the condition in S608, the user may be inquired whether not to establish communication or to establish communication via at least one link having a low security strength, and whether to establish at least one link or no link may be controlled on the basis of the instruction of the user.

FIG. 7 is a flowchart illustrating a procedure of the number determination process in S608. The number determination process in FIG. 7 is executed for each of the frames received in S601 and S606. In the present embodiment, as an example, the process for the frame received in S601, that is, the frame transmitted from the affiliated AP1 will be described.

In FIG. 7, the controller 402 determines in S701 whether the security standard of the affiliated AP1 is WPA2 or WPA3 on the basis of the information regarding the security strength obtained in S607. In the present embodiment, the information about the security strength obtained in S607 includes information indicating any of WPA3, WPA2, WPA, and WEP, for example, as information indicating the security standard of the affiliated AP1. The security strength of the security standard is higher in the order of WPA3, WPA2, WPA, and WEP, and in the present embodiment, and a case where a threshold for the security strength of the security standard is set to WPA2 will be described as an example. The threshold related to the security strength of the security standard may be set to a fixed value in advance, or may be changed by the user.

When it is determined in S701 that the security standard of the affiliated AP1 is WPA2 or WPA3, the controller 402 determines whether the encryption method of the affiliated AP1 is AES (S702). In the present embodiment, the information about the security strength obtained in S607 includes information indicating any one of AES, TKIP, and RC4, for example, as information indicating the encryption method used by the affiliated AP1. The security strength of the encryption method is higher in the order of AES, TKIP, and RC4, and in the present embodiment, a case where a threshold related to the security strength of the encryption method is set to AES will be described as an example. The threshold value related to the security strength of the encryption method may be set to a fixed value in advance, or may be changed by the user.

When it is determined in S702 that the encryption method of the affiliated AP1 is AES, the controller 402 determines whether the authentication method of the affiliated AP1 is SAE (S703). In the present embodiment, the information about the security strength obtained in S607 includes, for example, information indicating any one of SAE, PSK, common key authentication, and open system authentication as information indicating the authentication method used by the affiliated AP1. The security strength of the authentication method is higher in the order of SAE, PSK, common key authentication, and open system authentication, and in the present embodiment, a case where a threshold related to the security strength of the authentication method is set to SAE will be described as an example. The threshold related to the security strength of the authentication method may be set to a fixed value in advance, or may be changed by the user.

When it is determined in S703 that the authentication method of the affiliated AP1 is SAE, the controller 402 determines whether the mode of the affiliated AP1 is Enterprise (S704). In the present embodiment, the information about the security strength obtained in S607 includes, for example, either "Enterprise" indicating that the information is for an enterprise or "Personal" indicating that the information is for an individual, as the information indicating the usage of the AP MLD to which the affiliated AP1 belongs. The security strength of the mode is higher in the order of Enterprise and Personal, and in the present embodiment, a case where a threshold related to the security strength of the mode is set to Enterprise will be described as an example. The threshold related to the security strength of the mode may be set to a fixed value in advance, or may be changed by the user.

When it is determined in S704 that the mode of the affiliated AP 1 is Enterprise, the controller 402 determines that the security strength of the affiliated AP1 is higher than the threshold (S705). Thereafter, the present process is terminated.

When it is determined in S701 that the security standard of the affiliated AP1 is neither WPA2 nor WPA3, the process proceeds to S706. Also, when it is determined in S702 that the encryption method of the affiliated AP1 is not AES, the process proceeds to S706. Also, when it is determined in S703 that the authentication method of the affiliated AP1 is not SAE, the present process proceeds to S706. Further, when it is determined in S704 that the mode of the affiliated AP1 is not Enterprise, the process also proceeds to S706. In S706, the controller 402 determines that the security strength of the affiliated AP1 is below the threshold. Thereafter, the present process is terminated. In the present embodiment, the process in FIG. 7 is also performed on the frames received in S606, and it is determined whether the security strengths of the affiliated AP2 and AP3 are higher than the threshold.

According to the above-described embodiment, when a received frame includes a Basic Multi-Link element, a link is established with an affiliated AP, among the affiliated AP1, AP2, and AP3 (communication units), whose security strength exceeds the threshold. This achieves the data communication with the security strength equal to or higher than a certain level.

In the above-described embodiment, it is determined whether the security strength of the affiliated AP that has transmitted the frame exceeds the threshold on the basis of the received frame. This enables the control to establish a link only with an affiliated AP whose security strength exceeds the threshold among the affiliated APs that have transmitted the frames.

In the above-described embodiment, it is determined whether the security strength of the affiliated AP that has transmitted the frame exceeds the threshold on the basis of the information included in the received frame and indicating the security standard of the affiliated AP concerned. Thus, it is possible to easily determine whether the security strength of the affiliated AP that has transmitted the frame exceeds the threshold on the basis of the security standard of the affiliated AP concerned.

In the above-described embodiment, it is determined whether the security strength of the affiliated AP that has transmitted the frame exceeds the threshold on the basis of the information included in the received frame and indicating the encryption method used by the affiliated AP concerned. Thus, it is possible to easily determine whether the security strength of the affiliated AP that has transmitted the frame exceeds the threshold on the basis on the encryption method used by the affiliated AP concerned.

In the above-described embodiment, it is determined whether the security strength of the affiliated AP that has transmitted the frame exceeds the threshold on the basis of the information included in the received frame and indicating the authentication method used by the affiliated AP concerned. Thus, it is possible to easily determine whether the security strength of the affiliated AP that has transmitted the frame exceeds the threshold on the basis on the authentication method used by the affiliated AP concerned.

In the above-described embodiment, it is determined whether the security strength of the affiliated AP that has transmitted the frame exceeds the threshold on the basis of the information included in the received frame about the mode indicating the usage of the AP to which the affiliated AP concerned belongs. Accordingly, it is possible to easily determine whether the security strength of the affiliated AP that has transmitted the frame exceeds the threshold on the basis of the usage of the AP to which the affiliated AP concerned belongs.

In the above-described embodiment, when the received frame includes the Basic Multi-Link element, links are established with two or more affiliated APs having security strengths exceeding the threshold among the affiliated AP1, AP2, and AP3. This achieves the Multi-Link communication with the security strength equal to or higher than the certain level.

In the above-described embodiment, when the received frame includes the Basic Multi-Link element, a link is established with one affiliated AP having the security strength exceeding the threshold among the affiliated AP1, AP2, and AP3. This can prevent the Multi-Link communication that may be highly vulnerable from being performed.

In the present embodiment, when the number of affiliated APs whose security strengths are determined to be higher than the threshold in S608 is 0, a link may be established in S612 with an affiliated AP having the highest security strength among the affiliated AP1, AP2, and AP3 belonging to the AP 101.

In the present embodiment, the security strength may be determined by the frequency band in the process in FIG. 7. For example, when the transmission source of the received frame operates in the 6 GHz band, it is determined that the security strength of the transmission source is higher than the threshold. This is because it is decided to use the security standard of WPA3 in the 6 GHz band. On the other hand, when the transmission source of the received frame operates in the 5 GHz band, 2.4 GHz band, or frequency bands other than the 6 GHz band, it is determined that the security level of the transmission source is lower than the threshold. Accordingly, it is possible to easily determine whether the security strength of the affiliated AP that has transmitted the frame exceeds the threshold on the basis of the frequency band in which the affiliated AP concerned operates. That is, for example, when two links can be established in the 6 GHz band and one link can be established in the 4 GHz band, the STA selects the two links in the 6 GHz band and establishes communication connection.

A criteria for determining that the security strength is high may be dynamically changed according to a device settings of the STA. For example, when the security strength of the STA can be set from the operation unit of the STA and the apparatus setting of the security strength is set to "high", the threshold of the security strength is increased so that communication can be established only by the link of WPA3.

Next, a process in which the STA 102 that has already established a link with the AP 101 add a link with the AP 101 will be described.

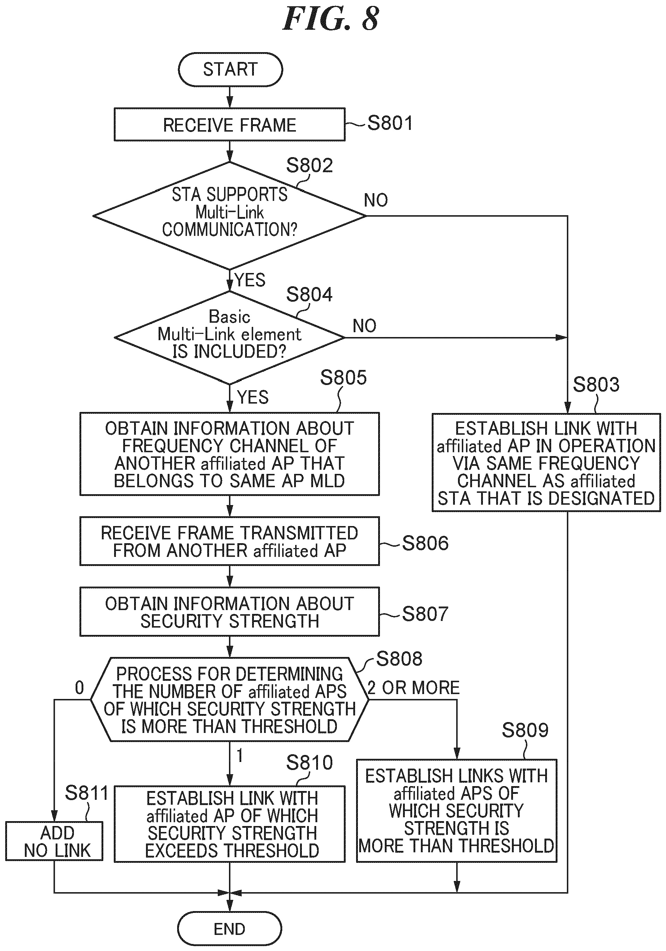

FIG. 8 is a flowchart illustrating another procedure of the link establishment control process performed by the STA 102 in FIG. 1. The link establishment control process in FIG. 8 is similar to the link establishment control process in FIG. 6, and the following description will be focused on the differences from the link establishment control process in FIG. 6. The link establishment control process in FIG. 8 is also achieved by the controller 402 executing the program stored in the storage unit 401 as with the link establishment control process in FIG. 6 described above. The link establishment control process in FIG. 8 is executed, for example, when the STA 102 receives a mode change instruction from the user to change the mode from a Single-Link mode to perform Single-Link communication to the Multi-Link mode, or when it is determined that the Multi-Link communication can be performed due to the surrounding radio wave environment or the like. Here, as an example, it is assumed that the STA 102 has established a link with one of the affiliated AP1, AP2, and AP3 belonging to the AP 101, for example, the affiliated AP1, in the Single-Link mode.

In FIG. 8, the process in S801 that is similar to the process in S601 describe above is performed. In this case, the user shall designate the affiliated AP1 operating in the same channel as the affiliated STA 1 with which the link has been established. Next, the process in S802 to S807 that is the same as the process in S602 to S607 described above is performed.

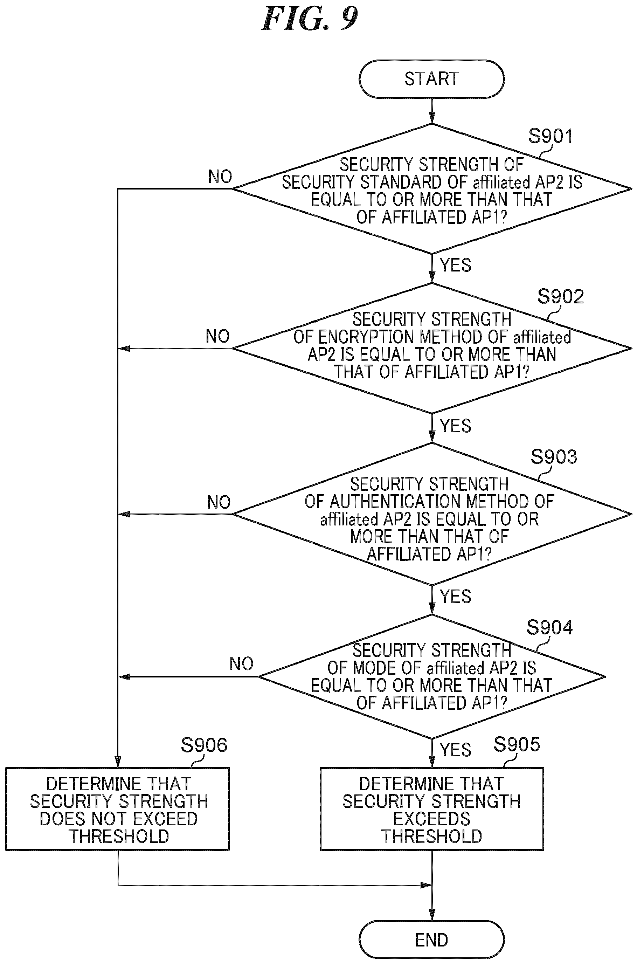

Next, the controller 402 performs a number determination process in FIG. 9 described later of determining the number of affiliated APs whose security strengths are higher than a threshold (S808). In S808, the process is performed on the frames received in S806, that is, the frames transmitted from the affiliated AP2 and AP3 other than the affiliated AP1 with which the link has been already established.

When the number of affiliated APs whose security strengths are determined to be higher than the threshold in S808 is two or more, the process proceeds to S809. In S809, the controller 402 establishes links with the plurality of affiliated APs whose security strengths are determined to be higher than the threshold in S808, i.e., the affiliated AP2 and AP3 belonging to the AP 101. That is, the link with the affiliated AP2 and the link with the affiliated AP3 are added in addition to the link with the affiliated AP1 that has been already established. Thereafter, the present process is terminated.

When the number of affiliated APs whose security strengths are determined to be higher than the threshold in S808 is one, the process proceeds to S810. In S810, the controller 402 establishes a link with one affiliated AP whose security strength is determined to be higher than the threshold among the affiliated AP2 and AP3 belonging to the AP 101 that has transmitted the frame subjected to the process in S808. For example, when it is determined in S808 that the security strength of the affiliated AP2 belonging to the AP 101 is higher than the threshold, a link with the affiliated AP2 is added in addition to the already established link with the affiliated AP1. Thereafter, the present process is terminated.

When the number of affiliated APs whose security strengths are determined to be higher than the threshold in S808 is 0, the process proceeds to S811. In S811, the controller 402 adds no link with the AP 101. That is, the establishment of the link with the affiliated AP1 is maintained as is. At this time, for example, a notification indicating that the Multi-Link communication with the AP 101 is not performed is displayed on the output unit 405. Thereafter, the present process is terminated.

FIG. 9 is a flowchart illustrating a procedure of the number determination process in S808 in FIG. 8. The number determination process in FIG. 9 is executed for each of the frames received in S806 as described above. In the present embodiment, as an example, the process for the frame that is received in S806 and is transmitted from the affiliated AP2 will be described.

In FIG. 9, the controller 402 determines whether the security strength of the security standard of the affiliated AP2 is equal to or higher than that of the affiliated AP1 (S901).

When it is determined in S901 that the security strength of the security standard of the affiliated AP2 is equal to or higher than that of the affiliated AP1, the process proceeds to S902. In S902, the controller 402 determines whether the security strength of the encryption method of the affiliated AP2 is equal to or higher than that of the affiliated AP1.

When it is determined in S902 that the security strength of the encryption method of the affiliated AP2 is equal to or higher than that of the affiliated AP1, the process proceeds to S903. In S903, the controller 402 determines whether the security strength of the authentication method of the affiliated AP2 is equal to or higher than that of the affiliated AP1.

When it is determined in S903 that the security strength of the authentication method of the affiliated AP2 is equal to or higher than that of the affiliated AP1, the process proceeds to S904. In S904, the controller 402 determines whether the security strength of the mode of the affiliated AP2 is equal to or higher than that of the affiliated AP 1.

When it is determined in S904 that the security strength of the mode of the affiliated AP2 is equal to or higher than that of the affiliated AP1, the controller 402 determines that the security strength of the affiliated AP2 exceeds the threshold (S905). Thereafter, the present process is terminated.

When it is determined in S901 that the security strength of the security standard of the affiliated AP2 is less than that of the affiliated AP1, the process proceeds to S906. Also, when it is determined in S902 that the security strength of the encryption method of the affiliated AP2 is less than that of the affiliated AP1, the processing proceeds to S906. In addition, when it is determined in S903 that the security strength of the authentication method of the affiliated AP2 is less than that of the affiliated AP1, the process proceeds to S906. Further, when it is determined in S904 that the security strength of the mode of the affiliated AP2 is less than that of the affiliated AP1, the process also proceeds to S906.

In S906, the controller 402 determines that the security strength of the affiliated AP2 is below the threshold. Thereafter, the present process is terminated. In the present embodiment, the number determination process in FIG. 8 is also performed on the frame of the affiliated AP3 received in S806, and it is determined whether the security strength of the affiliated AP3 exceeds the threshold.

In the above-described embodiment, a link with an affiliated AP whose security strength exceeds the threshold is additionally established. This achieves the Multi-Link communication with the security strength equal to or higher than the certain level.

Note that, the above-described determinations from S901 to S904 may be performed based on the threshold set in advance as with the above-described number determination process in FIG. 7, instead of using the security strength of the affiliated AP1 as a reference.

A storage medium in which a program code of software for achieving the above-described functions is recorded may be supplied to a system or an apparatus, and a computer (CPU or MPU) of the system or the apparatus may read and execute the program code stored in the recording medium. In this case, the program code itself read from the storage medium achieves the functions of the above-described embodiment, and the storage medium storing the program code constitutes the above-described apparatus.

As the storage medium for supplying the program code, for example, a flexible disk, a hard disk, an optical disk, a magneto-optical disk, a CD-ROM, a CD-R, a magnetic tape, a nonvolatile memory card, a ROM, a DVD, or the like can be used.

In addition, the above-described functions may be implemented not only by executing the program code read by the computer, but also by causing an OS running on the computer to perform a part or all of an actual process based on an instruction of the program code. The OS is an abbreviation of an operating system.

Further, the program code read from the storage medium may be written to a memory provided in a function expansion board inserted into the computer or a function expansion unit connected to the computer. Then, based on the instruction of the program code, a CPU provided in the function expansion board or the function expansion unit may perform a part or all of the actual process to achieve the above-described functions.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While various embodiments of the present disclosure have been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus (102) performing wireless communication with a wireless communication apparatus (101) compliant with a standard of IEEE802.11 series supporting Multi-Link communication, the communication apparatus (102) comprising:
a reception unit (504, S601) configured to receive a signal including information necessary for communication connection for performing the wireless communication from the wireless communication apparatus; and
a link establishment unit (501) configured to establish a link with the wireless communication apparatus (101) based on the signal,
wherein the link establishment unit (501) establishes at least one link with at least one communication unit whose security strength satisfies a predetermined condition among a plurality of communication units belonging to the wireless communication apparatus (101) and operating via different frequency channels, in a case where the signal includes predetermined information indicating that the wireless communication apparatus (101) supports the Multi-Link communication.

2. The communication apparatus (102) according to claim 1, further comprising a determination unit (402, S608) configured to determine whether a security strength of a communication unit of the wireless communication apparatus exceeds a threshold,
wherein the reception unit (504) receives the signal from each of the plurality of communication units, and
wherein the determination unit (402) determines whether the security strength of the communication unit that has transmitted the signal exceeds a threshold based on the signal.

3. The communication apparatus (102) according to claim 2, wherein the determination unit (402, S701) determines whether the security strength of the communication unit exceeds the threshold based on information included in the signal and indicating a security standard of the communication unit that has transmitted the signal.

4. The communication apparatus (102) according to claim 2 or 3, wherein the determination unit (402, S702) determines whether the security strength of the communication unit exceeds the threshold based on information included in the signal and indicating an encryption method used by the communication unit that has transmitted the signal.

5. The communication apparatus (102) according to any one of claims 2 to 4, wherein the determination unit (402, S703) determines whether the security strength of the communication unit exceeds the threshold based on information included in the signal and indicating an authentication scheme used by the communication unit that has transmitted the signal.

6. The communication apparatus (102) according to any one of claims 2 to 5, wherein the determination unit (402, S704) determines whether the security strength of the communication unit that has transmitted the signal exceeds the threshold based on information about a predetermined mode indicating a usage of the wireless the communication apparatus and included in the signal.

7. The communication apparatus (102) according to claim 2, wherein the determination unit (402) determines whether the security strength of the communication unit exceeds the threshold based on information included in the signal and indicating a frequency band in which the communication unit that has transmitted the signal operates.

8. The communication apparatus (102) according to any one of claims 2 to 7, wherein the link establishment unit (501, S609) establishes links with two or more communication units in a case where the determination unit determines that the security strengths of the two or more communication units exceed the threshold.

9. The communication apparatus (102) according to any one of claims 2 to 8, wherein the link establishment unit (501, S610) establishes a link with one communication unit in a case where the determination unit determines that the security strength of the one communication unit exceeds the threshold.

10. A control method for a communication apparatus (102) performing wireless communication with a wireless communication apparatus (101) compliant with a standard of IEEE802.11 series supporting Multi-Link communication, the control method comprising:
a reception step (S601) of receiving a signal including information necessary for communication connection for performing the wireless communication from the wireless communication apparatus (101); and
a link establishment step (S603, S609, or S610) of establishing a link with the wireless communication apparatus (101) based on the signal,
wherein at least one link with at least one communication unit whose security strength satisfies a predetermined condition among a plurality of communication units belonging to the wireless communication apparatus and operating via different frequency channels is established in the link establishment step in a case where the signal includes predetermined information indicating that the wireless communication apparatus supports the Multi-Link communication.

11. A computer readable storage medium storing a program for causing a computer to execute the control method for the communication apparatus (102) according to claim 10.

12. A computer program product including a program for causing a computer to execute the control method for the communication apparatus (102) according to claim 10.
